(19) Europäisches Patentamt
European Patent Office
Office européen des brevets

(11) **EP 4 598 209 A1**

(12) **EUROPEAN PATENT APPLICATION**
published in accordance with Art. 153(4) EPC

(43) Date of publication:
06.08.2025  Bulletin 2025/32

(21) Application number: 23873082.4

(22) Date of filing: 26.09.2023

(51) International Patent Classification (IPC):
*H04W 72/21* (2023.01)    *H04W 72/232* (2023.01)
*H04L 5/00* (2006.01)    *H04W 72/12* (2023.01)

(52) Cooperative Patent Classification (CPC):
H04L 5/00; H04W 72/12; H04W 72/21;
H04W 72/232

(86) International application number:
PCT/KR2023/014777

(87) International publication number:
WO 2024/071968 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  29.09.2022  US 202263411621 P

(71) Applicant: LG Electronics Inc.
Yeongdeungpo-gu
Seoul 07336 (KR)

(72) Inventors:
• LEE, Youngdae
  Seoul 06772 (KR)
• YANG, Suckchel
  Seoul 06772 (KR)
• BAE, Duckhyun
  Seoul 06772 (KR)
• KIM, Jaehyung
  Seoul 06772 (KR)
• KIM, Seonwook
  Seoul 06772 (KR)

(74) Representative: Plasseraud IP
104 Rue de Richelieu
CS92104
75080 Paris Cedex 02 (FR)

(54)  **METHOD AND DEVICE FOR TRANSMITTING/RECEIVING WIRELESS SIGNAL IN WIRELESS COMMUNICATION SYSTEM**

(57)  A method by which a user equipment (UE) transmits a signal in a wireless communication system according to at least one of embodiments disclosed in the present specification may comprise: transmitting, to a network, a first signal including a resource request for uplink transmission; receiving, from the network, a second signal including uplink resource allocation, in response to the resource request of the UE; and transmitting uplink data on the basis of the second signal, wherein the resource request of the UE included in the first signal includes M candidate resource sets, each having N uplink resources, one of the M candidate resource sets is allocated to the UE through the uplink resource allocation included in the second signal, and the uplink data can be transmitted through the N uplink resources included in one resource set allocated to the UE.

**FIG. 12**

EP 4 598 209 A1

## Description

### TECHNICAL FIELD

The present disclosure relates to a wireless communication system, and more particularly, to a method and apparatus for transmitting/receiving a wireless signal.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

According to an aspect, a method of transmitting a signal by a user equipment (UE) in a wireless communication system may include transmitting a first signal including a resource request for an uplink transmission to a network, receiving a second signal including an uplink resource allocation from the network in response to the resource request of the UE, and transmitting uplink data based on the second signal. The resource request of the UE included in the first signal may include M candidate resource sets each including N uplink resources. One of the M candidate resource sets may be allocated to the UE by the uplink resource allocation included in the second signal. The uplink data may be transmitted in the N uplink resources included in the one resource set allocated to the UE. The uplink data may be transmitted N times in the N uplink resources included in the allocated one resource set.

The resource request may be uplink control information (UCI) transmitted in a physical uplink control channel (PUCCH) resource for a scheduling resource (SR).

The resource request of the UE may be a medium access control (MAC) control element (CE). The MAC CE may be a MAC CE for a buffer status report (BSR).

The M candidate resource sets may be M candidate physical uplink shared channel (PUSCH) resource sets each including N PUSCH resources.

The second signal may be downlink control information (DCI) indicating one of the M candidate PUSCH resource sets.

The resource request of the UE may include, for the uplink data transmission, at least one of a slot length indication value (SLIV), a modulation and coding scheme (MCS), or an offset from the transmission of the first signal to the transmission of the uplink data.

According to another aspect, a computer-readable recording medium storing a program for performing the above method of transmitting a signal may be provided.

According to another aspect, a UE for performing the above method of transmitting a signal may be provided.

According to another aspect, a device for controlling a UE performing the above method of transmitting a signal may be provided.

According to another aspect, a method of transmitting a signal by a BS in a wireless communication system may include receiving a first signal including a resource request for an uplink transmission from a UE, transmitting a second signal including an uplink resource allocation to the UE in response to the resource request, and receiving uplink data based on the second signal. The resource request of the UE included in the first signal may include M candidate resource sets each including N uplink resources. One of the M candidate resource sets may be allocated to the UE by the uplink resource allocation included in the second signal. The uplink data may be received in the N uplink resources included in the one resource set allocated to the UE.

According to another aspect, a BS for performing the method of receiving a signal may be provided.

**ADVANTAGEOUS EFFECTS**

According to an embodiment of the present disclosure, a signal may be transmitted and received more accurately and more efficiently in a wireless communication system.

It will be appreciated by persons skilled in the art that the effects that could be achieved with the present disclosure are not limited to what has been particularly described hereinabove and other advantages of the present disclosure will be more clearly understood from the following detailed description.

**BRIEF DESCRIPTION OF THE DRAWINGS**

FIG. 1 illustrates physical channels used in a 3rd generation partnership project (3GPP) system as an exemplary wireless communication system, and a general signal transmission method using the same;

FIG. 2 illustrates a radio frame structure;

FIG. 3 illustrates a resource grid of a slot;

FIG. 4 illustrates exemplary mapping of physical channels in a slot;

FIG. 5 illustrates an example of a physical downlink shared channel (PDSCH) transmission/reception procedure;

FIG. 6 illustrates an example of a physical uplink shared channel (PUSCH) transmission/reception procedure;

FIG. 7 illustrates an exemplary GOP structure/pattern.

FIG. 8 illustrates an exemplary DCI-based PUSCH resource set allocation.

FIG. 9 illustrates a BSR MAC CE including a PUSCH resource set allocation/activation.

FIG. 10 illustrates a PUSCH resource set allocation/activation MAC CE.

FIG. 11 illustrates a PUSCH resource set allocation/activation MAC CE including a PDB.

FIG. 12 is a diagram illustrating signal transmission of a UE according to an embodiment.

FIG. 13 is a diagram illustrating signal reception of a BS according to an embodiment.

FIGS. 14 to 17 illustrate a communication system 1 and wireless devices applicable to the present disclosure; and

FIG. 18 illustrates discontinuous reception (DRX) operation applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/user equipments (UEs) sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

Details of the background, terminology, abbreviations, etc. used herein may be found in following documents.

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

Abbreviations and Terms

- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- PO: Paging Occasion
- MO: Monitoring Occasion
- SI: System Information
- SIB: System Information Block
- MIB: Master Information Block
- IE: Information Element
- RE: Resource Element
- RS: Reference Signal
- TRS: Tracking Reference Signal
- CSI-RS: Channel-State Information Reference Signal
- DRX: Discontinuous Reception
- C-DRX: Connected mode DRX
- RRC: Radio Resource Control
- AR: Augmented Reality
- VR: Virtual Reality
- SPS: Semi-persistent scheduling
- CG: Configured Grant

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

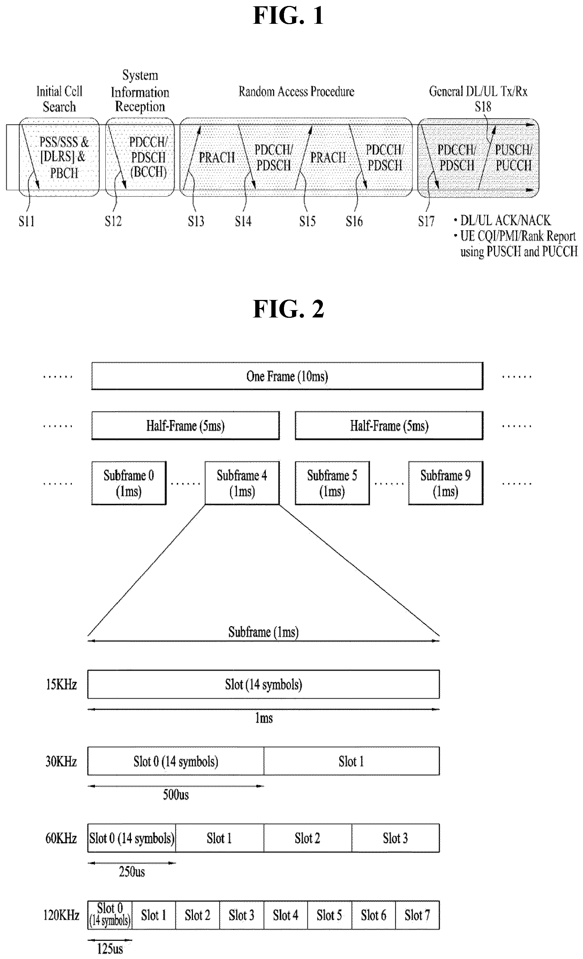

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

The cell search process of the UE may be summarized as follows.

- 1st step (related to PSS): Acquisition of SS/PBCH block (SSB) symbol timing and detection of cell ID within cell ID group (3 hypothesis)
- 2nd step (related to SSS): detection of cell ID group (336 hypothesis)
- 3rd step (related to PBCH DMRS): SSB index and half frame (HF) index (slot and frame boundary detection)
- 4th step (related to PBCH): Acquisition of time information (80 ms, system frame number (SFN), SSB index, HF), remaining minimum system information (RMSI), control resource set (CORESET)/search space configuration
- 5th step (related to PDCCH and PDSCH): Reception of cell access information and RACH configuration

There may be 336 cell ID groups, and each cell ID group may have three cell IDs. There may be 1008 cell IDs in total. Information about a cell ID group to which the cell ID of a cell belongs may be provided/obtained by/from an SSS of the cell, and information about a cell among 336 cells in the cell ID may be provided/obtained by/from a PSS.

There may be 336 cell ID groups, and each cell ID group may have three cell IDs. There may be 1008 cell IDs in total. Information about a cell ID group to which the cell ID of a cell belongs may be provided/obtained by/from an SSS of the cell, and information about a cell among 336 cells in the cell ID may be provided/obtained by/from a PSS.

SSBs are periodically transmitted with an SSB periodicity. A default SSB periodicity assumed by the UE in initial cell search is defined as 20 ms. After cell access, the SSB periodicity may be set to one of {5 ms, 10 ms, 20 ms, 40 ms, 80 ms, and 160 ms} by the network (e.g., BS). An SSB burst set may be configured at the beginning of the SSB periodicity. The SSB burst set may be set to a time window of 5 ms (i.e., half-frame), and the SSB may be repeatedly transmitted up to L times within the SS burst set. The maximum number of SSB transmissions L may be given depending carrier frequency bands as follows. One slot includes up to two SSBs.

- For frequency range up to 3 GHz, L = 4
- For frequency range from 3GHz to 6 GHz, L = 8
- For frequency range from 6 GHz to 52.6 GHz, L = 64

The time-domain positions of candidate SSBs in the SS burst set may be defined depending on subcarrier spacings. The time-domain positions of the candidate SSBs are indexed from (SSB indices) 0 to L-1 in temporal order within the SSB burst set (i.e., half-frame).

Multiple SSBs may be transmitted within the frequency span of a carrier. Each SSB may not need to have a unique physical layer cell identifier, but different SSBs may have different physical layer cell identifiers.

The UE may acquire DL synchronization by detecting the SSB. The UE may identify the structure of the SSB burst set based on the detected SSB (time) index, and thus the UE may detect a symbol/slot/half-frame boundary. The frame/half-frame number to which the detected SSB belongs may be identified based on system frame number (SFN) information and half-frame indication information.

Specifically, the UE may obtain a 10-bit SFN for a frame to which a PBCH belongs from the PBCH. Then, the UE may obtain 1-bit half-frame indication information. For example, when the UE detects a PBCH in which the half-frame indication bit is set to 0, the UE may determine that an SSB to which the PBCH belongs is included in the first half-frame of the frame. When the UE detects the PBCH in which the half-frame indication bit is set to 1, the UE may determine that the SSB to which the PBCH belongs is included in the second half-frame of the frame. Finally, the UE may obtain the SSB index of the SSB to which the PBCH belongs based on a DMRS sequence and a PBCH payload carried by the PBCH.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

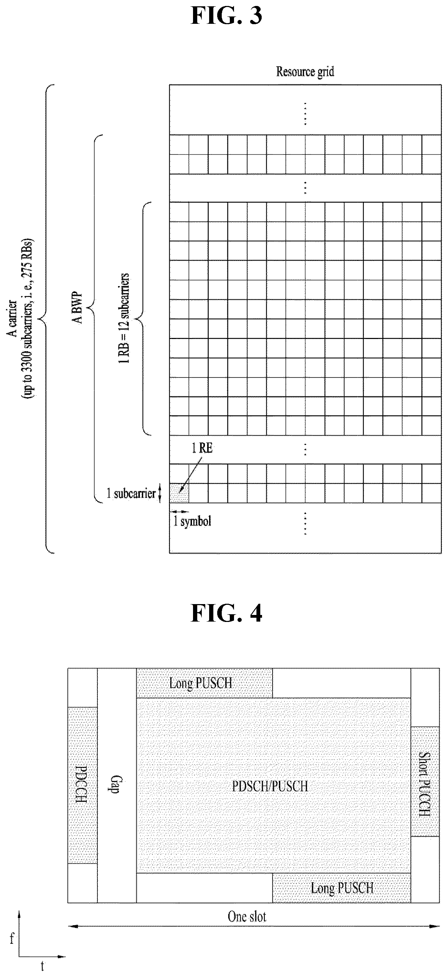

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. In the NR system, a frame is characterized by a self-contained structure in which all of a DL control channel, DL or UL data, and a UL control channel may be included in one slot. For example, the first N symbols (hereinafter, referred to as a DL control region) of a slot may be used to transmit a DL control channel (e.g., PDCCH), and the last M symbols (hereinafter, referred to as a UL control region) of the slot may be used to transmit a UL control channel (e.g., PUCCH). Each of N and M is an integer equal to or larger than 0. A resource region (hereinafter, referred to as a data region) between the DL control region and the UL control region may be used to transmit DL data (e.g., PDSCH) or UL data (e.g., PUSCH). A guard period (GP) provides a time gap for transmission mode-to-reception mode switching or reception mode-to-transmission mode switching at a BS and a UE. Some symbol at the time of DL-to-UL switching in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

A BS may transmit a control resource set (CORESET) configuration to a UE. A CORSET is defined as a resource element group (REG) set having a given numerology (e.g., an SCS, a CP length, and so on). An REG is defined as one OFDM symbol by one (P)RB. A plurality of CORESETs for one UE may overlap with each other in the time/frequency domain. A CORSET may be configured by system information (e.g., a master information block (MIB)) or higher-layer signaling (e.g., radio resource control (RRC) signaling). For example, configuration information about a specific common CORSET (e.g., CORESET #0) may be transmitted in an MIB. For example, a PDSCH carrying system information block 1 (SIB1) may be scheduled by a specific PDCCH, and CORSET #0 may be used to carry the specific PDCCH. Configuration information about CORESET #N (e.g., N>0) may be transmitted by RRC signaling (e.g., cell-common RRC signaling or UE-specific RRC signaling). For example, the UE-specific RRC signaling carrying the CORSET configuration information may include various types of signaling such as an RRC setup message, an RRC reconfiguration message, and/or BWP configuration information. Specifically, a CORSET configuration may include the following information/fields.

- controlResourceSetId: indicates the ID of a CORESET.
- frequencyDomainResources: indicates the frequency resources of the CORESET. The frequency resources of the CORESET are indicated by a bitmap in which each bit corresponds to an RBG (e.g., six (consecutive) RBs). For example, the most significant bit (MSB) of the bitmap corresponds to a first RBG. RBGs corresponding to bits set to 1 are allocated as the frequency resources of the CORESET.
- duration: indicates the time resources of the CORESET. Duration indicates the number of consecutive OFDM symbols included in the CORESET. Duration has a value of 1 to 3.
- cce-REG-MappingType: indicates a control channel element (CCE)-REG mapping type. Interleaved and non-interleaved types are supported.
- interleaverSize: indicates an interleaver size.
- pdcch-DMRS-ScramblingID: indicates a value used for PDCCH DMRS initialization. When pdcch-DMRS-ScramblingID is not included, the physical cell ID of a serving cell is used.
- precoderGranularity: indicates a precoder granularity in the frequency domain.
- reg-BundleSize: indicates an REG bundle size.
- tci-PresentInDCI: indicates whether a transmission configuration index (TCI) field is included in DL-related DCI.
- tci-StatesPDCCH-ToAddList: indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE. The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a USS set or a CSS set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: indicates the ID of an SS.
- controlResourceSetId: indicates a CORESET associated with the SS.
- monitoringSlotPeriodicity AndOffset: indicates a periodicity (in slots) and offset (in slots) for PDCCH monitoring.
- monitoringSymbolsWithinSlot: indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: indicates the number of PDCCH candidates (one of values 0, 1, 2, 3, 4, 5, 6, and 8) for each AL where AL={1, 2, 4, 8, 16}.
- searchSpaceType: indicates common search space (CSS) or UE-specific search space (USS) as well as a DCI format used in the corresponding SS type.

Subsequently, the BS may generate a PDCCH and transmit the PDCCH to the UE , and the UE may monitor PDCCH candidates in one or more SSs to receive/detect the PDCCH. An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |

(continued)

| DCI format | Usage |
|---|---|
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

PDSCH carries downlink data (e.g., DL-SCH transport block, DL-SCH TB). The modulation scheme such as Quadrature Phase Shift Keying (QPSK), 16 Quadrature Amplitude Modulation (QAM), 64 QAM, or 256 QAM is applied to the PDSCH. A codeword is generated by encoding the TB. The PDSCH can carry up to two codewords. Scrambling and modulation mapping are performed for each codeword, and modulation symbols generated from each codeword may be mapped to one or more layers. Each layer is mapped to resources along with a demodulation reference signal (DMRS), is generated as an OFDM symbol signal, and is transmitted through a corresponding antenna port.

PUCCH carries Uplink Control Information (UCI). UCI may include one or more of following information:

- SR (Scheduling Request): Information used to request a UL-SCH resource.
- HARQ (Hybrid Automatic Repeat reQuest)-ACK (Acknowledgment): It is a response to a downlink data packet (e.g., codeword) on the PDSCH, and indicates whether the downlink data packet has been successfully received. 1 bit of HARQ-ACK may be transmitted in response to a single codeword, and 2 bits of HARQ-ACK may be transmitted in response to two codewords. The HARQ-ACK response includes positive ACK (simply, ACK), negative ACK (NACK), DTX or NACK/DTX. Here, HARQ-ACK may be called as HARQ ACK/NACK and ACK/NACK.
- CSI (Channel State Information): feedback information for a downlink channel. Multiple Input Multiple Output (MIMO)-related feedback information includes a Rank Indicator (RI) and a Precoding Matrix Indicator (PMI).

Table 5 shows PUCCH formats. According to PUCCH length, PUCCH formats can be classified as Short PUCCH (format 0, 2) and Long PUCCH (format 1, 3, 4).

[Table 5]

| PUCCH format | Length in OFDM symbols $N_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUSCH carries uplink data (e.g., UL-SCH transport block, UL-SCH TB) and/or uplink control information (UCI). PUCCH is transmitted based on a CP-OFDM (Cyclic Prefix - Orthogonal Frequency Division Multiplexing) waveform or a Discrete Fourier Transform-spread-Orthogonal Frequency Division Multiplexing (DFT-s-OFDM) waveform. When the PUSCH is transmitted based on the DFT-s-OFDM waveform, the UE performs transform precoding for the PUSCH. For example, if transform precoding is not performed (e.g., transform precoding is disabled), the UE transmits a PUSCH based on the CP-OFDM waveform. If transform precoding is performed (e.g., transform precoding is enabled), the UE transmits the PUSCH based on a CP-OFDM waveform or a DFT-s-OFDM waveform. PUSCH transmission is dynamically scheduled by a UL grant in DCI (e.g., Layer 1 (PDCCH) signaling), and/or semi-statically scheduled based on higher layer (e.g., RRC) signaling (configured grant). PUSCH transmission may be performed on a codebook-based or non-codebook-based basis.

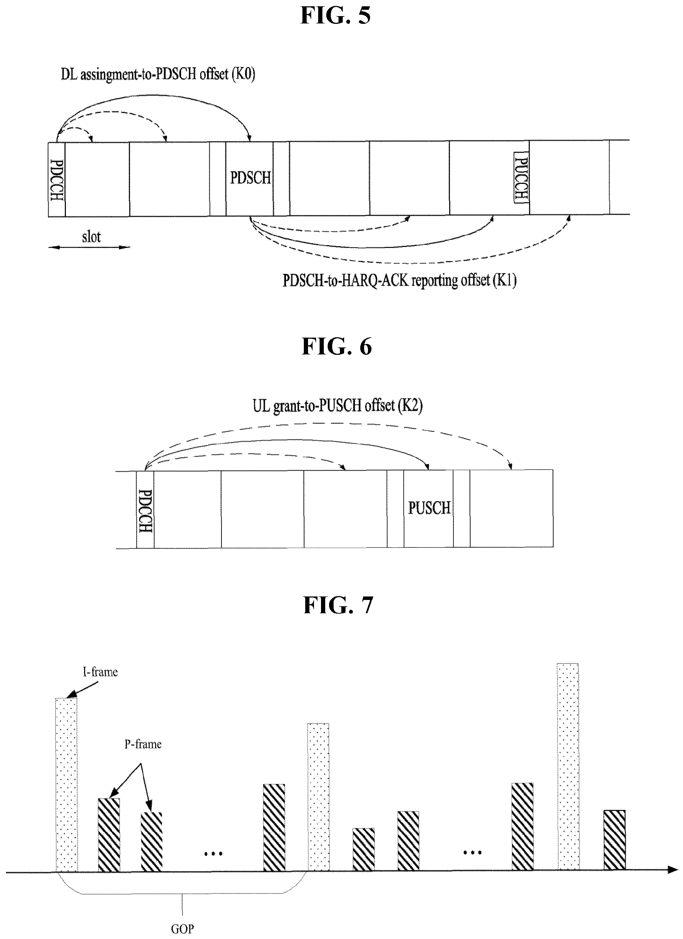

FIG. 5 illustrates an example of a PDSCH transmission/reception procedure. Referring to FIG. 5, the UE may detect the PDCCH in slot #n. Here, the PDCCH includes downlink scheduling information (e.g., DCI formats 1_0, 1_1), and the PDCCH indicates a DL assignment-to-PDSCH offset (K0) and a PDSCH-HARQ-ACK reporting offset (K1). For example, DCI formats 1_0 and 1_1 may include the following information:

- Frequency domain resource assignment (FDRA): FDRA indicates the RB set allocated to the PDSCH.
- Time domain resource assignment (TDRA): TDRA indicates K0 (e.g., slot offset), the starting position (e.g., OFDM symbol index) of the PDSCH within slot #n+K0, and the length of the PDSCH (e.g., the number of OFDM symbols).
- PDSCH-to-HARQ_feedback timing indicator, which indicates K1 (e.g., slot offset)
- HARQ process number (4 bits), which indicates the HARQ process ID (Identity) for data (e.g., PDSCH, TB)
- PUCCH resource indicator (PRI): PRI indicates a PUCCH resource to be used for UCI transmission among a plurality of PUCCH resources in the PUCCH resource set

The UE receives the PDSCH in slot #(n+K0) based on the scheduling information received in slot #n. After completion of the PDSCH reception in slot #n1 (where, n+K0$\leq$ n1), the UE may transmit UCI through PUCCH from slot #(n1+K1). Here, the UCI may include a HARQ-ACK response for the PDSCH. In FIG. 5, for convenience, it is assumed that the SCS for the PDSCH and the SCS for the PUCCH are the same, and it is assumed that slot # n1 = slot # n + K0, but the present disclosure is not limited thereto. If the SCSs are different, K1 may be indicated/interpreted based on the SCS of the PUCCH.

If the PDSCH is configured to carry a maximum of 1 TB, the HARQ-ACK response may have 1-bit. When the PDSCH is configured to carry a maximum of 2 TBs, the HARQ-ACK response may be configured with 2-bits when spatial bundling is not configured, and may be configured with 1-bits when spatial bundling is configured. When the HARQ-ACK transmission time for the plurality of PDSCHs is configured as slot #(n+K1), the UCI transmitted in the slot #(n+K1) includes HARQ-ACK responses for the plurality of PDSCHs.

Whether the UE should perform spatial bundling for the HARQ-ACK response may be configured for each cell group (e.g., RRC/higher layer signaling). As an example, spatial bundling may be individually configured in each of the HARQ-ACK response transmitted through the PUCCH and/or the HARQ-ACK response transmitted through the PUSCH.

Spatial bundling may be supported when the maximum number of TBs (or codewords) that can be received at one time in the corresponding serving cell (or schedulable through 1 DCI) is two (or two or more) (e.g., higher layer parameter maxNrofCodeWordsScheduledByDCI is equal to 2-TB). Meanwhile, a number of layers greater than four may be used for 2-TB transmission, and a maximum of four layers may be used for 1-TB transmission. As a result, when spatial bundling is configured in a corresponding cell group, spatial bundling may be performed on a serving cell that can schedule more than four layers among serving cells in the corresponding cell group. On a corresponding serving cell, a UE desiring to transmit a HARQ-ACK response through spatial bundling may generate a HARQ-ACK response by performing (bit-wise) logical AND operation on ACK/NACK (A/N) bits for a plurality of TBs.

For example, assuming that the UE receives DCI for scheduling 2-TB and receives 2-TB through the PDSCH based on the DCI. If spatial bundling is performed, a single A/N bit may be generated by performing a logical AND operation on the first A/N bit for the first TB and the second A/N bit for the second TB. As a result, if both the first TB and the second TB are ACKs, the UE reports the ACK bit value to the BS, and when either TB is NACK, the UE reports the NACK bit value to the BS.

For example, when only a 1-TB is actually scheduled on a serving cell in which 2-TB reception is allowed, the UE may generate a single A/N bit by performing a logical AND operation on the A/N bit for the corresponding 1-TB and a bit value of 1. As a result, the UE may report the A/N bit for the corresponding 1-TB to the BS as it is.

A plurality of parallel DL HARQ processes can be configured for DL transmission in the base station/terminal. A plurality of parallel HARQ processes allow DL transmissions to be performed continuously while waiting for HARQ feedback on successful or unsuccessful reception of the previous DL transmission. Each HARQ process is associated with a HARQ buffer of a MAC (Medium Access Control) layer. Each DL HARQ process manages information related to the number of MAC PDU (Physical Data Unit) transmissions in the buffer, HARQ feedback for the MAC PDU in the buffer, and a current redundancy version. Each HARQ process is identified by a HARQ process ID.

FIG. 6 illustrates an example of a PUSCH transmission/reception procedure. Referring to FIG. 6, the UE may detect the PDCCH in slot #n. Here, the PDCCH includes uplink scheduling information (e.g., DCI formats 0_0, 0_1). DCI formats 0_0 and 0_1 may include the following information:

- Frequency domain resource assignment (FDRA), which indicates the RB set allocated to the PUSCH
- Time domain resource assignment (TDRA), which indicates the slot offset K2, the start position (e.g., symbol index) and length (e.g., number of OFDM symbols) of the PUSCH in the slot. The start symbol and length may be indicated through a Start and Length Indicator Value (SLIV), or may be indicated respectively.

The UE may transmit the PUSCH in slot #(n+K2) according to the scheduling information received in slot #n. The PUSCH may include a UL-SCH TB.

**SPS associated Dynamic Grant Transmission**

The present disclosure proposes a method of reducing power consumption and increasing the efficiency of radio resources, while ensuring the availability and reliability of transmission resources, when video information of an XR service is transmitted in preconfigured resources such as by SPS in an NR wireless communication system.

In NR, one or more SPS PDSCHs may be configured for a UE, for periodic transmission and reception or low latency and PDCCH overhead. Each SPS configuration may repeat configured/indicated resources with a periodicity. That is, an initially configured/indicated resource allocation may be repeated with a configured periodicity, and the UE may perform a DL reception in corresponding resources without a separate PDCCH reception process. In XR, various types of data may be generated. Among these data, it is considered to transmit and receive sensor and location information about the UE, which are generally reported with a specific periodicity, and video data in SPS resources. These data may not always have a fixed traffic arrival time and may experience jitter, for such reasons as a video encoding time, a sensor measurement time, a higher layer operation, or a change in routing of a network to which the data is transmitted.

When resources are allocated to a location in time sufficiently spaced apart from an expected traffic arrival time in consideration of jitter, resource availability may be guaranteed, but latency may occur. On the contrary, when SPS resources with a fixed periodicity are allocated to an expected traffic arrival time, larger latency may occur due to a waiting time until the next available resource, when jitter occurs.

Further, since some data are generated based on an event, it is impossible to accurately identify an actual traffic arrival time. However, it is considered to use SPS resources even for these data in order to reduce latency caused by scheduling. In this case, skipping methods have been discussed in the past, in which sufficient resources are allocated with a short periodicity in preparation for traffic arrival, and a UE or a BS selectively uses these resources, while skipping the other resources. However, in order to use a method of skipping transmission and reception, it is necessary to carefully consider response signals between the UE and the BS to confirm whether data has been received or transmitted. When the UE transmits a response signal for a transmission that has not been received, the BS should always prepare resources in which the UE is to transmit the response signal, and considering that the skipping method is based on configuration of sufficient radio resources, this may impose a large UL burden. Further, considering that these resources may be multiplexed between UEs, the UL resource burden should be considered more importantly.

Since low latency is essential for the quality of an XR service, it is necessary to consider a method of minimizing the impact of latency, while reducing the impact of jitter. To solve this problem, the present disclosure proposes a method of selectively using some of a plurality of SPS resources configured between a UE and a BS and transmitting a response for the SPS resources used in this way at a predetermined location in a simplified manner.

GOP (Group of Pictures)

FIG. 7 illustrates an example of a GOP structure/pattern.

A GOP for video coding may include I, P, B, and D picture types.

An I picture or I frame (also called intra-coded picture, key frame, or i-frame) is a picture encoded independently of all other pictures. Each GOP begins with a picture of this type (in decoding order).

A predictive-coded (P) picture or P frame includes motion-compensated difference information relative to a previously decoded picture. In older designs such as MPEG-1, H.262/MPEG-2, and H.263, each P picture may reference only one picture, and the picture should precede the P picture in display and decoding order and should be an I or P picture. This constraint is not imposed on the latest standards H.264/MPEG-4 AVC and HEVC.

A bipredictive-coded (B) picture or B frame includes motion-compensated difference information relative to a previously decoded picture. In older designs such as MPEG-1 and H.262/MPEG-2, each B picture may reference only two pictures: the one preceding the B picture and the one following it. All referenced pictures should be I or I. P picture. This constraint is not imposed on the latest standards H.264/MPEG-4 AVC and HEVC.

A direct coded (DC) (D) picture or D frame serves as a fast-access representation of a picture for loss robustness or fast-forward. D pictures are only used in MPEG-1 video.

As illustrated in FIG. 7, an I frame indicates the start of a GOP. It is followed by several P and B frames. In a previous scheme, an allowed order and a reference structure are relatively limited.

The GOP structure may be represented by two numbers, such as M=3 and N=12. The first number represents the distance between two anchor frames (I or P). The second number represents the distance between two full images (I frames). This is a GOP size. In the example of M=3 and N=12, the GOP structure is IBBPBBPBBPBBI. Instead of the M parameter, the maximum number of B frames between two consecutive anchor frames may be used.

For example, in the sequence of a pattern IBBBBPBBBBPBBBBBI, the GOP size (N value) is 15 (the length between two I-frames) and the distance (M value) between two anchor frames is 5 (the length between an I frame and a P frame or the length between two consecutive P frames).

The I frame includes a full image and does not require any additional information to reconstruct it. Typically, an encoder uses a GOP structure that causes each I frame to be a "clean random access point". Therefore, decoding may start on an I frame, and any errors within the GOP structure may be corrected after processing a correct I frame.

Although the proposed methods are described in the context of semi-statically configured DL SPS radio resources in the present disclosure, it is understood by those skilled in the art that the proposed methods of the present disclosure are not limited to them and may be extended to radio resources allocated through dynamic scheduling received by a UE. For example, a method of determining one HARQ-ACK timing for a plurality of allocated DL radio resources by a UE may be applied regardless of an SPS PDSCH and a PDSCH indicated by dynamic scheduling. In addition, the proposed methods may also be applied, when a plurality of radio resources are configured not semi-statically but by a dynamic indication, for example, when a plurality of radio resources are configured at once by DCI. Therefore, it is obvious that the proposed methods may be applied to all types of transmission and reception methods expected by a BS and a UE. Hereinafter, for the convenience of description, SPS is used as a general concept to collectively refer to radio resources configured semi-statically (e.g., by DL/UL SPS or CG).

In the present disclosure, a transmission occasion (TO) means a radio resource (e.g., an SPS PDSCH) configured for SPS purposes. An entity (i.e., a BS on DL and a UE on UL) performing a transmission in a TO may attempt a transmission in a TO, and a receiver (i.e., the UE on DL and the BS on UL) may expect a transmission and attempt a reception in each TO.

Although the proposed methods are described below in the context of an NR system, they are not limited specifically to an NR transmission/reception scheme. In addition, although examples are given based on the characteristics and structure of XR services below, the proposed methods are not limited specifically to the support of the XR services. Therefore, the proposed methods may be applied to all wireless communication transmission/reception structures and services.

### Scheduling request or buffer status report for multi-PUSCH scheduling

The present disclosure propose a method of requesting scheduling of one or more PUSCH transmission resources based on an SR and/or UCI and/or a UL MAC CE (e.g., BSR MAC CE) according to generated UL traffic, and performing transmission accordingly. A plurality of PUSCH resources may mean a plurality of PUSCH resources that are dynamically allocated. These PUSCH transmissions may be activated autonomously by the UE based on the SR or the UCI or the UL MAC CE, or may be activated by the BS at the request of the UE.

In the conventional technology, the BS performs configuration such that a specific schedulingRequestID is mapped to an SR PUCCH resource according to a specific periodicity and offset identified by a specific schedulingRequestResourceId. In the present disclosure, the BS performs configuration such that a specific PUSCH resource set index is mapped to one or more schedulingRequestIDs. Alternatively, the BS performs configuration such that a specific schedulingRequestID is mapped to one or more PUSCH resource set indexes. A PUSCH resource set includes one or more PUSCH transmission resources. When the UE transmits a specific SR PUCCH resource, the BS that receives it may expect or allocate transmission of a specific PUSCH resource set index indicated by the specific SR PUCCH resource.

### [1] Method A: Method of allocating N multiple PUSCH resources based on transmission of a specific SR resource or a MAC CE transmission such as a BSR

The BS may configure one or more PUSCH resource sets including one or more PUSCH resources for a specific UE. In this method, the UE may directly allocate a PUSCH resource set and notify the BS of the allocation by an SR resource or a MAC CE. For this operation, the BS may provide the following configuration for each PUSCH resource set.

1) PUSCH resource set index values: The identifiers of one or more PUSCH resource sets configured for the specific UE by the BS.

2) SLIV candidate values: Candidate values are configured for an SLIV that the UE may determine for a specific PUSCH resource set index to be activated. The UE may inform the BS of one or more of the configured SLIV values.

3) Candidate values of PUSCH period length and/or PUSCH period count: Candidate values are configured for a PUSCH period length and/or a PUSCH period count that the UE may determine for a specific PUSCH resource set index to be activated. The UE may inform the BS of one PUSCH period length and/or PUSCH period count value among the configured PUSCH period lengths and/or PUSCH period counts.

4) K4 candidate values: Candidate values are configured for K4 that the UE may determine for a specific PUSCH resource set index to be activated. The UE may inform the BS of one or more of the configured K4 values.

In Method 2A, since a PUSCH resource set is activated by transmission of an SR, UCI, or a MAC CE from the UE, without DCI, the interval between an SR/UCI/MAC CE transmission slot and a PUSCH slot is defined as k4.

5) MCS candidate values: Candidate values are configured for an MCS value for PUSCH resource set transmission for a specific PUSCH resource set index to be activated. The UE may inform the BS of one MCS value to be applied to a PUSCH resource set transmission among the configured MCS values.

6) TDRA table candidate rows: Candidate values are configured for a TDRA table row value for a PUSCH resource set transmission, for a specific PUSCH resource set index to be activated. The UE may inform the BS of one TDRA table row value to be applied to a PUSCH resource set transmission among the configured TDRA table row values.

The BS may map one or more logical channels to a specific PUSCH resource set index. When data to be transmitted is available for a logical channel and the logical channel is mapped to a specific PUSCH resource set index, the UE may transmit positive SR information in an SR PUCCH resource mapped to the specific PUSCH resource set index.

An SR PUCCH resource or a schedulingRequestID mapped to the SR PUCCH resource may be configured to be mapped to the following information.

1) PUSCH resource set index: Mapped to one or more PUSCH resource set indexes configured by an RRC message.

2) SLIV value: For a PUSCH resource set index mapped to the SR PUCCH resource or schedulingRequestID, or a PUSCH resource set index linked to a logical channel mapped to the schedulingRequestID, it is mapped to one of SLIV candidate values configured by an RRC message.

3) PUSCH period length and/or PUSCH period count: For the PUSCH resource set index mapped to the SR PUCCH resource or schedulingRequestID, or the PUSCH resource set index linked to the logical channel mapped to the schedulingRequestID, it is mapped to one of candidate values of a PUSCH period length and/or a PUSCH period count configured by an RRC message.

4) K4 value: For the PUSCH resource set index mapped to the SR PUCCH resource or schedulingRequestID, or the PUSCH resource set index linked to the logical channel mapped to the schedulingRequestID, it is mapped to one of K4 candidate values configured by an RRC message.

5) MCS value: For the PUSCH resource set index mapped to the SR PUCCH resource or schedulingRequestID, or the PUSCH resource set index linked to the logical channel mapped to the schedulingRequestID, it is mapped to one of MCS candidate values configured by an RRC message.

6) TDRA table row: For the PUSCH resource set index mapped to the SR PUCCH resource or schedulingRequestID, or the PUSCH resource set index linked to the logical channel mapped to the schedulingRequestID, it is mapped to a specific row of a TDRA table configured by the RRC message.

When there is no SR PUCCH resource mapped to the specific PUSCH resource set index, when a BSR is triggered, or when a UL grant is available, the UE may transmit positive SR information through UCI piggybacked to a PUSCH or transmit a specific MAC CE through a PUSCH to notify the BS of activation of the specific PUSCH resource set index. The specific MAC CE is a BSR MAC CE or a new MAC CE that may be included in a MAC PDU with a higher or lower priority than the BSR MAC CE.

This type of UCI or MAC CE may indicate one or more of the following pieces of information.

1) PUSCH resource set index: Indicates activation or deactivation of one or more PUSCH resource set indexes configured by an RRC message.

2) SLIV value: Indicates one of SLIV candidate values configured by an RRC message, for the indicated one or more PUSCH resource set indexes.

3) SLIV value: Mapped to one of SLIV candidate values configured by an RRC message, for the indicated one or more PUSCH resource set indexes.

4) PUSCH period length and/or PUSCH period count: Mapped to one of candidate values of a PUSCH period length and/or a PUSCH period count configured by an RRC message, for the indicated one or more PUSCH resource set indexes.

5) K4 value: Mapped to one of K4 candidate values configured by an RRC message, for the indicated one or more PUSCH resource set indexes.

6) MCS value: Mapped to one of MCS candidate values configured by an RRC message, for the indicated one or more PUSCH resource set indexes.

7) TDRA table row: Mapped to a specific row of a TDRA table configured by the RRC message, for the indicated one or more PUSCH resource set indexes.

According to the above configuration and SR/UCI/MAC CE method, when the UE successfully transmits an SR or UCI or a MAC CE, the UE activates or resumes a specific PUSCH resource set that has been deactivated or suspended according to a PUSCH resource set index. The UE continues the PUSCH transmission for a specific period of time or a specific number of times from a first PUSCH transmission determined according to K4, and then autonomously deactivates or suspends the PUSCH resource set. The specific period of time or the specific number of times may be determined by the PUSCH period length and/or PUSCH period count value that the UE notifies the BS, or may be determined by a PUSCH period length and/or PUSCH period count value that the BS specifies by an RRC message for the corresponding PUSCH resource set index.

Even if the PUSCH period length and/or the PUSCH period count is specified, the UE may deactivate the specific activated PUSCH resource set by transmitting a specific SR PUCCH resource. Alternatively, the UE may notify the BS of the deactivation of the specific PUSCH resource set through UCI or a MAC CE. To this end, a specific SR PUCCH resource may be configured to be mapped to the deactivation of the specific PUSCH resource set. Alternatively, a specific SR PUCCH resource mapped to the activation of the specific PUSCH resource set may also be mapped to the deactivation of the specific PUSCH resource set. In this case, transmission of the specific SR PUCCH resource after the activation of a specific PUSCH resource set may indicate the deactivation of the corresponding PUSCH resource set.

Regardless of the PUSCH period length and/or the PUSCH period count, the BS may deactivate the PUSCH resource set activated autonomously by the UE according to an indication of the BS by transmitting DCI indicating release/deactivation of the specific PUSCH resource set.

When the UE fails to successfully transmit the SR or UCI or MAC CE, the UE may repeatedly transmit the SR or UCI or MAC CE as many times as the number of times set by the BS.

**[2] Method B: method of requesting N multiple PUSCH resources through transmission of a specific SR resource or a MAC CE such as a BSR**

The BS may configure one or more PUSCH resource sets including one or more PUSCH resources for a specific UE. In this method, according to a UL traffic pattern for a logical channel where data is available, the UE selects the index of a specific PUSCH resource set mapped to it, and requests the selected specific PUSCH resource set index from the BS by an SR resource or a MAC CE. For this operation, the BS may provide the following configuration for each PUSCH resource set.

    1) PUSCH resource set index values: The identifiers of one or more PUSCH resource sets configured for the specific UE by the BS.
    2) SLIV candidate values: Candidate values are configured for an SLIV that the UE may determine for a specific PUSCH resource set index to be activated. The UE may request one or more of the configured SLIV values from the BS.
    3) Candidate values of PUSCH period length and/or PUSCH period count: Candidate values are configured for a PUSCH period length and/or a PUSCH period count that the UE may determine for a specific PUSCH resource set index to be activated. The UE may request one of the configured PUSCH period lengths and/or PUSCH period counts from the BS.
    4) K4 candidate values: Candidate values are configured for K4 that the UE may determine for a specific PUSCH resource set index to be activated. The UE may request one or more of the configured K4 values from the BS.

In Method 2B, since a PUSCH resource set is activated by transmission of an SR, UCI, or a MAC CE from the UE without DCI, the interval between an SR/UCI/MAC CE transmission slot and a PUSCH slot is defined as k4.

    5) MCS candidate values: Candidate values are configured for an MCS value for a PUSCH resource set transmission, for a specific PUSCH resource set index to be activated. The UE may inform the BS of one MCS value to be applied to the PUSCH resource set transmission among the configured MCS values.
    6) TDRA table candidate rows: Candidate values are configured for a TDRA table row value for a PUSCH resource set transmission, for a specific PUSCH resource set index to be activated. The UE may inform the BS of one TDRA table row value to be applied to the PUSCH resource set transmission among the configured TDRA table row values.
    7) Remaining PDB candidate values: Candidate values are configured for the remaining PDB of data in a UL PDCP buffer or RLC buffer for a specific PUSCH resource set index to be activated. The UE may select a value that is the same as or closest to the remaining PDB of data to be transmitted, the closest value that is the same as or higher than the remaining PDB, or the closest value that is the same as or lower than the remaining PDB, among the configured PDB values, and inform the BS of the selected PDB value.

The BS may map one or more logical channels to a specific PUSCH resource set index. When data to be transmitted is available for a logical channel and the logical channel is mapped to the specific PUSCH resource set index, the UE may transmit positive SR information in an SR PUCCH resource mapped to the specific PUSCH resource set index.

An SR PUCCH resource or a schedulingRequestID mapped to the SR PUCCH resource may be configured to be mapped to the following information.

1) PUSCH resource set index: Mapped to one or more PUSCH resource set indexes configured by an RRC message.

2) SLIV value: For a PUSCH resource set index mapped to the SR PUCCH resource or schedulingRequestID, or a PUSCH resource set index linked to a logical channel mapped to the schedulingRequestID, it is mapped to one of SLIV candidate values configured by an RRC message.

3) PUSCH period length and/or PUSCH period count: For the PUSCH resource set index mapped to the SR PUCCH resource or schedulingRequestID, or the PUSCH resource set index linked to the logical channel mapped to the schedulingRequestID, it is mapped to one of candidate values of a PUSCH period length and/or a PUSCH period count configured by an RRC message.

4) K4 value: For a PUSCH resource set index mapped to the SR PUCCH resource or schedulingRequestID, or a PUSCH resource set index linked to a logical channel mapped to the schedulingRequestID, it is mapped to one of K4 candidate values configured by an RRC message.

5) MCS value: For a PUSCH resource set index mapped to the SR PUCCH resource or schedulingRequestID, or a PUSCH resource set index linked to a logical channel mapped to the schedulingRequestID, it is mapped to one of MCS candidate values configured by an RRC message.

6) TDRA table row: For a PUSCH resource set index mapped to the SR PUCCH resource or schedulingRequestID, or a PUSCH resource set index linked to a logical channel mapped to the schedulingRequestID, it is mapped to a specific row of a TDRA table configured by the RRC message.

7) Remaining PDB value: For a PUSCH resource set index mapped to the SR PUCCH resource or schedulingRequestID, or a PUSCH resource set index linked to a logical channel mapped to the schedulingRequestID, it is mapped to one of remaining PDB candidate values configured by an RRC message.

When there is no SR PUCCH resource mapped to the specific PUSCH resource set index, when a BSR is triggered, or when a UL grant is available, the UE may transmit positive SR information through UCI piggybacked to a PUSCH or transmit a specific MAC CE through a PUSCH to notify the BS of activation of the specific PUSCH resource set index. The specific MAC CE is a BSR MAC CE or a new MAC CE that may be included in a MAC PDU with a higher or lower priority than the BSR MAC CE.

This type of UCI or MAC CE may indicate one or more of the following pieces of information.

1) PUSCH resource set index: Indicates activation or deactivation of one or more PUSCH resource set indexes configured by an RRC message.

2) SLIV value: Indicates one of SLIV candidate values configured by an RRC message, for the indicated one or more PUSCH resource set indexes.

3) PUSCH period length and/or PUSCH period count: Mapped to one of candidate values of a PUSCH period length and/or a PUSCH period count configured by an RRC message, for the indicated one or more PUSCH resource set indexes.

4) K4 value: Mapped to one of K4 candidate values configured by an RRC message, for the indicated one or more PUSCH resource set indexes.

5) MCS value: Mapped to one of MCS candidate values configured by an RRC message, for the indicated one or more PUSCH resource set indexes.

6) TDRA table row: Mapped to a specific row of a TDRA table configured by the RRC message, for the indicated one or more PUSCH resource set indexes.

7) Remaining PDB value: Mapped to one of remaining PDB candidate values configured by an RRC message, for the indicated one or more PUSCH resource set indexes.

According to the above configuration and SR/UCI/MAC CE method, when the UE successfully transmits an SR or UCI or a MAC CE, the BS may allocate or activate a specific PUSCH resource set by DCI or a MAC CE or an RRC message.

For example, when a PUSCH resource set is allocated or activated by DCI, the DCI may indicate the index of the specific PUSCH resource set or DCI information may be configured as follows.

A method of allocating a PUSCH resource set including a plurality of PUSCH transmissions is as follows. In this case, one PUSCH resource set may be configured such that a plurality of PUSCH transmissions occur periodically or repeatedly according to a specific pattern.

A single DCI may allocate the same PUSCH time domain resource allocation (TDRA) that occurs periodically.

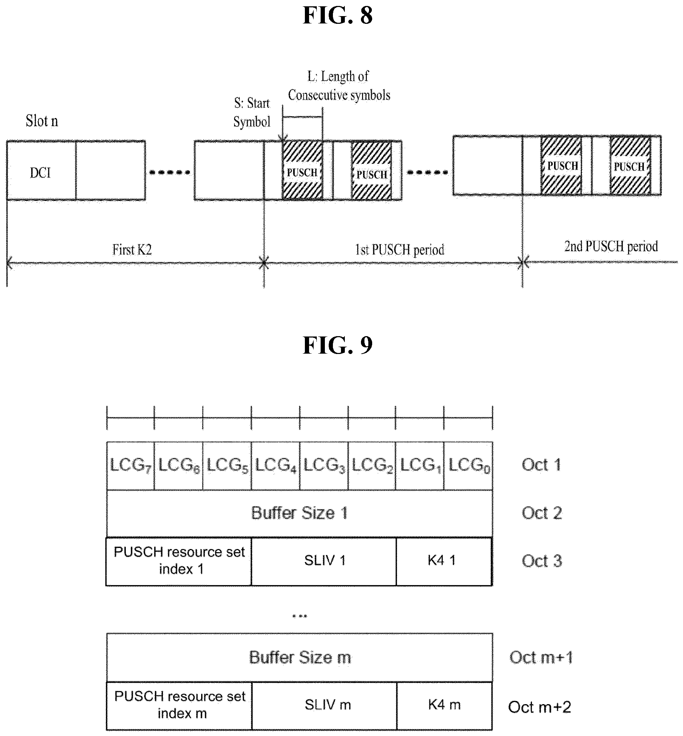

FIG. 8 illustrates an exemplary DCI-based PUSCH resource set allocation. Referring to FIG. 8, an SLIV value that allocates the same PUSCH start symbol and the same PUSCH length through a single DCI may be repeatedly applied every PUSCH period. In the present disclosure, a single PUSCH resource set may mean periodic PUSCH resources formed by repeating the same SLIV N times every PUSCH period. In addition, for repeated transmissions of the same TB or a plurality of TB transmissions, the BS may allocate a PUSCH resource set so that the same or different SLIVs are applied to one or more PUSCH slots every PUSCH period. Through this allocation method, a PUSCH resource set for single type traffic with a single periodicity may be configured.

In consideration of XR traffic, the PUSCH period may be set to a value of 4ms, 16ms, 16.5ms, or 17ms. To support this PUSCH resource set, DCI may indicate a TDRA as follows.

(1) Opt A1: DCI indicates a first K2 and an SLIV, and indicates a fixed-length offset.

The UE determines a first PUSCH slot from the DCI according to the first K2 value, and determines PUSCH symbols in the first PUSCH slot according to the indicated SLIV. Thereafter, a PUSCH slot in the next PUSCH period is determined according to the indicated offset value.

The BS may include this offset indication information in a TDRA table row. Alternatively, the offset may be indicated by a separate DCI field.

(2) Opt A2: DCI indicates a first K2 and an SLIV, and indicates a period length and a period count or a total scheduling duration.

For example, when configuring a PUSCH resource set based on an SLIV which is repeated every 16ms, the UE determines a first PUSCH slot from the DCI according to the first K2 value, and determines PUSCH symbols in the first PUSCH slot according to the indicated SLIV. Thereafter, the same SLIV is applied to PUSCH slots every 16ms from the first PUSCH slot, and the PUSCH slots are determined by limiting this to as many PUSCH slots as the period count. Thereafter, the UE determines PUSCH resources by applying the same SLIV to each determined PUSCH slot. Alternatively, the UE determines PUSCH resources by applying the same SLIV to PUSCH slots every 16ms from the first PUSCH slot, and applying the SLIV only to PUSCH slots falling within a total scheduling duration.

The BS may include the periodicity and period count or the total scheduling duration indication information in a TDRA table row. Alternatively, the BS may indicate the periodicity and the period count or the total scheduling duration by a separate DCI field.

The start time of the first PUSCH period may be determined as the first PUSCH slot indicated by the first K2 or as a reference slot configured by the RRC from the BS.

A plurality of period lengths may be included in DCI. For example, when DCI includes a list of periodicities, the UE may determine a first PUSCH slot from the DCI according to a first K2 value, determine a second PUSCH slot after the first PUSCH slot by a first period according of the list, and determine an $(N+1)^{th}$ PUSCH slot after an $N^{th}$ PUSCH slot by an $N^{th}$ period of the list.

(3) Opt A3: K2 scaling by scaling factor (e.g. K2 x 4 ms factor)

DCI indicates a k2 list including one or more K2 values. When there is no scaling factor, a first K2 value in the list indicates a PUSCH slot in a first PUSCH period, a second k2 value indicates a PUSCH slot in a second PUSCH period, and an $N^{th}$ k2 value indicates a PUSCH slot in an $N^{th}$ PUSCH period.

When the DCI includes a scaling factor or a scaling factor is configured by an RRC message, the UE applies the same scaling factor to each of the one or more k2 values indicated by the DCI. For example, when the first K2 value is 3 slots and the second k2 value is 7 slots in the list, and the scaling factor is 4ms or 4 slots, the UE determines that the first K2 value is 3 slots X 4ms or 4 slots. For example, it may be determined that the first PUSCH slot occurs in the $12^{th}$ slot and the second PUSCH slot occurs in the $28^{th}$ slot, from the DCI.

The BS may include such scaling factor indication information in a TDRA table row. Alternatively, the scaling factor may be indicated by a separate DCI field.

One DCI may allocate a plurality of PUSCH TDRAs that occur periodically. For example, in FIG. 8, while the SLIV value that allocates the same PUSCH start symbol and the same PUSCH length through one DCI may be repeatedly applied to each PUSCH period, the BS may allocate a PUSCH resource set so that different SLIVs are applied to one or more PUSCH slots per one PUSCH period, for a plurality of TB transmissions. Through this allocation method, a PUSCH resource set for a plurality of traffic types with different periodicities may be configured.

For example, in FIG. 8, when different SLIVs are applied to two PUSCH slots allocated to each PUSCH period, one DCI indicates a first K2 and SLIV, and a second K2 and SL IV, together.

1) One of the above options A1/A2/A3 may be applied to the first K2 and the first SLIV to allocate first periodic PUSCH resources, and one of the above options A1/A2/A3 may be applied independently to the second K2 and the second SLIV to allocate additional second periodic PUSCH resources.

-    Last PUSCH resource allocation times may be determined respectively by applying separate period lengths, period counts, or total scheduling durations to the first periodic PUSCH resources and the second periodic PUSCHs.

- Alternatively, separate period lengths, period counts, or total scheduling durations may be applied to the first periodic PUSCH resources and the second periodic PUSCHs, to ensure that the first periodic PUSCH resource allocation and the second periodic PUSCH resource allocation are both terminated at the earlier or later of two last PUSCH resource allocation times.

- Alternatively, separate period lengths, period counts, or total scheduling durations may be applied to the first periodic PUSCH resources and the second periodic PUSCHs, and the second periodic PUSCH resources may be allocated only during the first period of the first PUSCH resources. In this case, the first period of the first PUSCH resources is longer than the second period of the second periodic PUSCH resources.

2) Alternatively, for the first K2 and the first SLIV, periodic PUSCH resources may be allocated by applying one of the above options A1/A2/A3, and for the second K2 and the second SLIV, only one PUSCH resource transmission may be allocated without applying the above options A1/A2/A3.

3) Alternatively, for the second K2 and the second SLIV, one of the above options A1/A2/A3 may be applied to allocate periodic PUSCH resources, and for the first K2 and the first SLIV, only one PUSCH resource transmission may be allocated without applying the above options A1/A2/A3.

In the above methods, DCI may indicate one or more of the following pieces of information. Information not indicated by the DCI below may also be configured by an RRC message.

1) One or more K2's or K2 lists
2) The same SLIV value for all K2's or the same or different SLIV value for each K2
3) The same PUSCH period for all K2's or the same or different PUSCH period for each K2
4) The number of PUSCH slots (consecutive or non-consecutive) within a PUSCH period
5) The number of PUSCH periods or a total scheduling duration

Instead of the above method, DCI may indicate PUSCH slots where PUSCH allocation occurs by a bitmap. For example, when a 6-bit bitmap indicates 001011, a slot indicated as 1 during 6 slots starting from the next slot of the first PUSCH slot indicated by the K2 value of the DCI is determined as a PUSCH slot. For example, a PUSCH is allocated to the $3^{rd}$, $5^{th}$, and $6^{th}$ slots immediately after the first PUSCH slot indicated by the K2 value. One SLIV indicated by the DCI may be applied equally to all PUSCH slots. Alternatively, when a plurality of SLIV lists are indicated by the DCI, different SLIVs are applied to different slots in the order of the lists.

The UE activates or resumes a specific PUSCH resource set that has been deactivated or suspended according to a PUSCH resource set index. The UE continues a PUSCH transmission for a specific period of time or a specific number of times from a first PUSCH transmission determined by DCI, and then autonomously deactivates or suspends the PUSCH resource set. The specific period of time or the specific number of times may be determined by a PUSCH period length and/or a PUSCH period count that the UE notifies the BS, or may be determined by a PUSCH period length and/or a PUSCH period count value that the BS specifies in an RRC message for the corresponding PUSCH resource set index.

Even if the PUSCH period length and/or the PUSCH period count is specified, the UE may deactivate the specific activated PUSCH resource set by transmitting a specific SR PUCCH resource. Alternatively, the UE may notify the BS of the deactivation of the specific PUSCH resource set by UCI or a MAC CE. To this end, a specific SR PUCCH resource may be configured to be mapped to the deactivation of the specific PUSCH resource set. Alternatively, a specific SR PUCCH resource mapped to the activation of the specific PUSCH resource set may also be mapped to the deactivation of the specific PUSCH resource set. In this case, transmission of the specific SR PUCCH resource transmitted after the activation of the specific PUSCH resource set may indicate deactivation of the corresponding PUSCH resource set.

Regardless of the PUSCH period length and/or the PUSCH period count, the BS may deactivate the PUSCH resource set in the middle according to an indication of the BS by transmitting DCI indicating release/deactivation of the specific PUSCH resource set.

When the UE fails to successfully transmit an SR or UCI or a MAC CE, the UE may repeatedly transmit the SR or the UCI or the MAC CE as many times as configured by the BS.

<u>MAC CE format</u>

A logical channel for pose information may be mapped to a specific SR resource or a specific LCG (or a specific field value) of a BSR to request SPS or 1 or N PDSCH resources.

In Method A and Method B, a UE that performs or requests allocation or activation of a PUSCH resource set through a MAC CE may configure and transmit the MAC CE in the following format. In Methods 2A and 2B, a MAC CE may be configured by changing a CG config Index field to a PUSCH resource set index field, a CG offset field to a K4 field, and a CG duration field to a PUSCH period length and/or PUSCH period count field in the following MAC CE format.

1) Option 1: BSR MAC CE with Activation of PUSCH resource set

When a BSR is triggered, the UE may transmit a BSR MAC CE including PUSCH resource set allocation/activation information according to a configuration of the BS. FIG. 9 illustrates a BSR MAC CE including PUSCH resource set allocation/activation. Referring to FIG. 9, the UE may indicate or request allocation or cancellation or activation or deactivation of a corresponding PUSCH resource set to or from the BS by including a specific PUSCH resource set index in the BSR MAC CE. In addition, fields for various parameters as described above may be included. For example, the location of a resource allocated by the UE may be notified to the BS by an SLIV and K4 of the allocated/activated PUSCH resource set.

2) Option 2: PUSCH resource set Allocation/Activation MAC CE

Depending on a configuration of the BS, the UE of the disclosure may transmit a PUSCH resource set allocation/activation MAC CE.

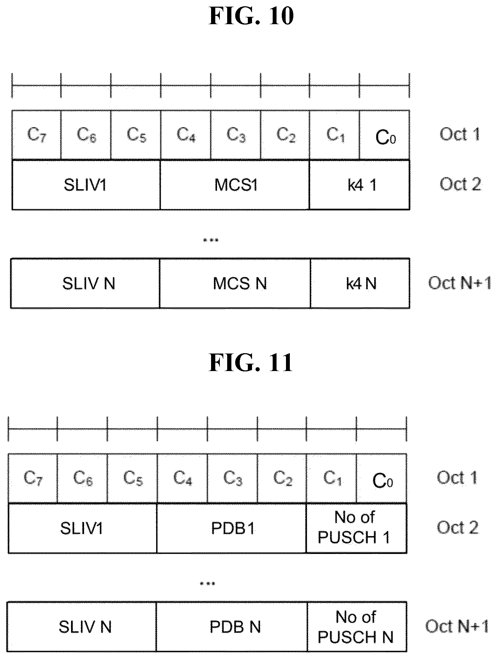

FIG. 10 illustrates a PUSCH resource set allocation/activation MAC CE. Referring to FIG. 10, the MAC CE includes eight $C_i$ fields, and each $C_i$ field is mapped to a specific PUSCH resource set index. When the value of a $C_i$ field is 0, the UE indicates or requests minimization or deactivation of an $i^{th}$ PUSCH resource set to or from the BS, and when the value of the $C_i$ field is 1, the UE indicates or requests allocation or activation of the $i^{th}$ PUSCH resource set to or from the BS. In addition, fields for various parameters mentioned above may be included. For example, the location of a resource allocated by the UE may be indicated to the BS by an SLIV and K4 of the allocated/activated PUSCH resource set.

3) Option 3: PUSCH resource set Allocation/Activation with PDB

Depending on a configuration of the BS, the UE of the disclosure may transmit a PUSCH resource set allocation/activation MAC CE.

FIG. 11 illustrates a PUSCH resource set allocation/activation MAC CE including a PDB. Referring to FIG. 11, the MAC CE includes eight $C_i$ fields, and each $C_i$ field is mapped to a specific PUSCH resource set index. When the value of a $C_i$ field is 0, the UE requests minimization or deactivation of an $i^{th}$ PUSCH resource set from the BS, and when the value of the $C_i$ field is 1, the UE requests allocation or activation of the $i^{th}$ PUSCH resource set from the BS. In addition, fields for various parameters mentioned above may be included. For example, the location of a resource allocated by the UE may be indicated to the BS by an SLIV and PDB of the allocated/activated PUSCH resource set.

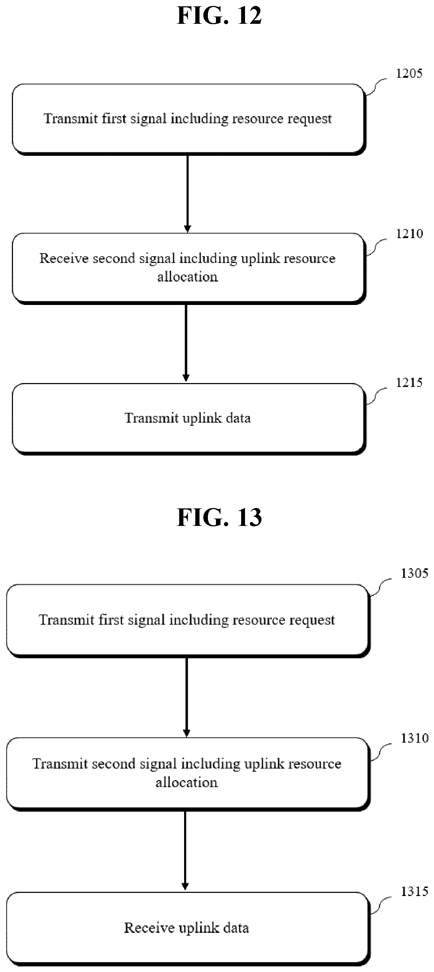

FIG. 12 is a diagram illustrating signal transmission of a UE according to an embodiment.

Referring to FIG. 12, the UE may transmit a first signal including a resource request for an uplink transmission to a network (1205). The resource request of the UE included in the first signal may include M candidate resource sets each including N uplink resources.

The UE may receive a second signal including an uplink resource allocation from the network in response to the resource request (1210). One of the M candidate resource sets may be allocated to the UE by the uplink resource allocation included in the second signal.

The UE may transmit uplink data based on the second signal (1215). The uplink data may be transmitted in the N uplink resources included in the one resource set allocated to the UE. The uplink data may be transmitted N times in the N uplink resources included in the allocated one resource set.

The resource request may be UCI transmitted in a PUCCH resource for an SR.

The resource request of the UE may be a MAC CE. The MAC CE may be a MAC CE for a BSR.

The M candidate resource sets may be M candidate PUSCH resource sets each including N PUSCH resources.

The second signal may be DCI indicating one of the M candidate PUSCH resource sets.

The resource request of the UE may include, for the uplink data transmission, at least one of an SLIV, an MCS, or an offset from the transmission of the first signal to the transmission of the uplink data.

FIG. 13 is a diagram illustrating signal reception of a BS according to an embodiment.

Referring to FIG. 13, the BS may receive a first signal including a resource request for an uplink transmission from a UE (1305). The resource request of the UE included in the first signal may include M candidate resource sets each including N uplink resources.

The BS may transmit a second signal including an uplink resource allocation to the UE in response to the resource request (1310). One of the M candidate resource sets may be allocated to the UE by the uplink resource allocation included in the second signal.

The BS may receive uplink data based on the second signal (1315). The uplink data may be received in the N uplink resources included in the one resource set allocated to the UE.

The resource request may be UCI received in a PUCCH resource for an SR.

The resource request of the UE may be a MAC CE. The MAC CE may be a MAC CE for a BSR.

The M candidate resource sets may be M candidate PUSCH resource sets each including N PUSCH resources.

The second signal may be DCI indicating one of the M candidate PUSCH resource sets.

The resource request of the UE may include, for the uplink data transmission, at least one of an SLIV, an MCS, or an offset from the reception of the first signal to the reception of the uplink data.

The various details, functions, procedures, proposals, methods, and/or operational flowcharts described in this document may be applied to a variety of fields that require wireless communication/connections (e.g., 5G) between devices.

Hereinafter, a description will be given in detail with reference to the drawings. In the following drawings/descriptions, the same reference numerals may denote the same or corresponding hardware blocks, software blocks, or functional blocks unless specified otherwise.

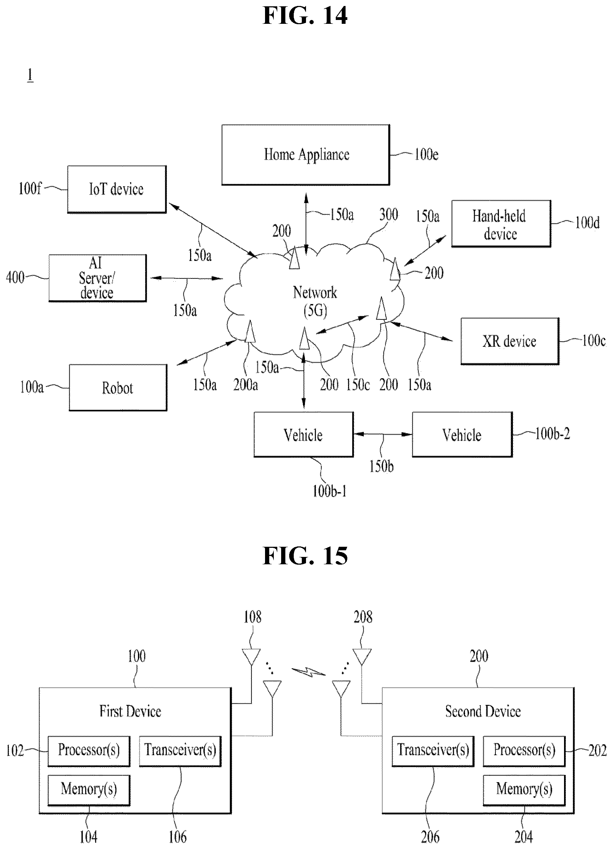

FIG. 14 illustrates a communication system 1 applied to the present disclosure.

Referring to FIG. 14, a communication system 1 applied to the present disclosure includes wireless devices, base stations (BSs), and a network. Herein, the wireless devices represent devices performing communication using radio access technology (RAT) (e.g., 5G New RAT (NR)) or Long Term Evolution (LTE)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or D2D communication), or inter-BS communication (e.g., relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with radio frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more protocol data units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices.

The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

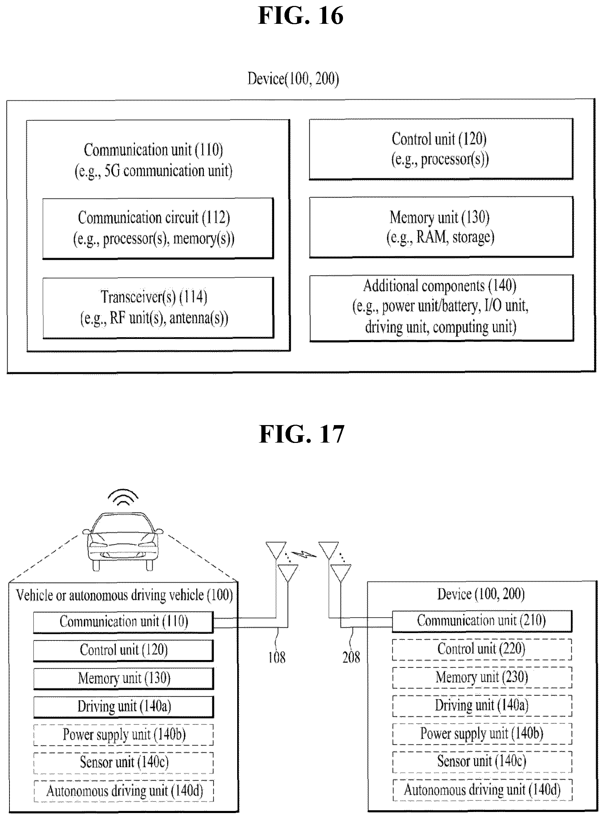

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a Fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 17 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an electronic control unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

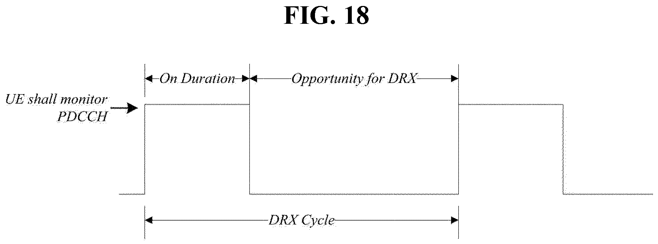

FIG. 18 is a diagram illustrating a discontinuous reception (DRX) operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 18, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 6 describes a DRX operation of a UE (in the RRC_CONNECTED state). Referring to Table 6, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 6]

|  | Type of signals | UE procedure |
|---|---|---|
| 1st step | RRC signalling (MAC-Cell GroupConfig) | - Receive DRX configuration information |
| 2nd Step | ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected.
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of transmitting a signal by a user equipment (UE) in a wireless communication system, the method comprising:

   transmitting a first signal including a resource request for an uplink transmission to a network;
   receiving a second signal including an uplink resource allocation from the network in response to the resource request of the UE; and
   transmitting uplink data based on the second signal,
   wherein the resource request of the UE included in the first signal includes M candidate resource sets each including N uplink resources,
   wherein one of the M candidate resource sets is allocated to the UE by the uplink resource allocation included in the second signal, and
   wherein the uplink data is transmitted in the N uplink resources included in the one resource set allocated to the UE.

2. The method of claim 1, wherein the uplink data is transmitted N times in the N uplink resources included in the allocated one resource set.

3. The method of claim 1, wherein the resource request is uplink control information (UCI) transmitted in a physical uplink control channel (PUCCH) resource for a scheduling resource (SR).

4. The method of claim 1, wherein the resource request of the UE is a medium access control (MAC) control element (CE).

5. The method of claim 4, wherein the MAC CE is a MAC CE for a buffer status report (BSR).

6. The method of claim 1, wherein the M candidate resource sets are M candidate physical uplink shared channel (PUSCH) resource sets each including N PUSCH resources.

7. The method of claim 6, wherein the second signal is downlink control information (DCI) indicating one of the M candidate PUSCH resource sets.

8. The method of claim 1, wherein the resource request of the UE includes, for the uplink data transmission, at least one of a slot length indication value (SLIV), a modulation and coding scheme (MCS), or an offset from the transmission of the first signal to the transmission of the uplink data.

9. A computer-readable recording medium storing a program for performing the method of claim 1.

10. A device for wireless communication, the device comprising:

   a memory configured to store instructions; and
   a processor configured to perform operations by executing the instructions,
   wherein the operations of the processor include:

      transmitting a first signal including a resource request for an uplink transmission to a network;
      receiving a second signal including an uplink resource allocation from the network in response to the resource request of the device; and
      transmitting uplink data based on the second signal,
      wherein the resource request of the UE included in the first signal includes M candidate resource sets each including N uplink resources,
      wherein one of the M candidate resource sets is allocated to the device by the uplink resource allocation included in the second signal, and
      wherein the uplink data is transmitted in the N uplink resources included in the one resource set allocated to the device.

11. The device of claim 10, wherein the device is an application specific integrated circuit (ASIC) or a digital signal processing device.

12. The device of claim 10, wherein the device is a user equipment (UE) operating in a 3rd generation partnership project (3GPP)-based wireless communication system.

13. A method of transmitting a signal by a base station (BS) in a wireless communication system, the method comprising:

   receiving a first signal including a resource request for an uplink transmission from a user equipment (UE);
   transmitting a second signal including an uplink resource allocation to the UE in response to the resource request; and
   receiving uplink data based on the second signal,
   wherein the resource request of the UE included in the first signal includes M candidate resource sets each including N uplink resources,
   wherein one of the M candidate resource sets is allocated to the UE by the uplink resource allocation included in the second signal, and
   wherein the uplink data is received in the N uplink resources included in the one resource set allocated to the UE.

14. A base station (BS) for wireless communication, the BS comprising:

   a transceiver; and
   a processor configured to control the transceiver to receive a first signal including a resource request for an uplink transmission from a user equipment (UE), transmit a second signal including an uplink resource allocation to the UE in response to the resource request, and receive uplink data based on the second signal,

wherein the resource request of the UE included in the first signal includes M candidate resource sets each including N uplink resources,

wherein one of the M candidate resource sets is allocated to the UE by the uplink resource allocation included in the second signal, and

wherein the uplink data is received in the N uplink resources included in the one resource set allocated to the UE.

# FIG. 1

| Initial Cell Search | System Information Reception | Random Access Procedure | | | | General DL/UL Tx/Rx S18 | |
|---|---|---|---|---|---|---|---|
| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |
| S11 | S12 | S13 | S14 | S15 | S16 | S17 | |

- DL/UL ACK/NACK
- UE CQI/PMI/Rank Report using PUSCH and PUCCH

# FIG. 2

One Frame (10ms)

Half-Frame (5ms)   Half-Frame (5ms)

Subframe 0 (1ms) ...... Subframe 4 (1ms)   Subframe 5 (1ms) ...... Subframe 9 (1ms)

Subframe (1ms)

15KHz: Slot (14 symbols) — 1ms

30KHz: Slot 0 (14 symbols) | Slot 1 — 500us

60KHz: Slot 0 (14 symbols) | Slot 1 | Slot 2 | Slot 3 — 250us

120KHz: Slot 0 (14 symbols) | Slot 1 | Slot 2 | Slot 3 | Slot 4 | Slot 5 | Slot 6 | Slot 7 — 125us

# FIG. 3

# FIG. 4

# FIG. 5

DL assingment-to-PDSCH offset (K0)

PDCCH

slot

PDSCH

PUCCH

PDSCH-to-HARQ-ACK reporting offset (K1)

# FIG. 6

UL grant-to-PUSCH offset (K2)

PDCCH

PUSCH

# FIG. 7

I-frame

P-frame

...

...

GOP

# FIG. 8

# FIG. 9

# FIG. 10

| $C_7$ | $C_6$ | $C_5$ | $C_4$ | $C_3$ | $C_2$ | $C_1$ | $C_0$ | Oct 1 |
|---|---|---|---|---|---|---|---|---|
| SLIV1 | | | MCS1 | | | k4 1 | | Oct 2 |

...

| SLIV N | MCS N | k4 N | Oct N+1 |
|---|---|---|---|

# FIG. 11

| $C_7$ | $C_6$ | $C_5$ | $C_4$ | $C_3$ | $C_2$ | $C_1$ | $C_0$ | Oct 1 |
|---|---|---|---|---|---|---|---|---|
| SLIV1 | | | PDB1 | | | No of PUSCH 1 | | Oct 2 |

...

| SLIV N | PDB N | No of PUSCH N | Oct N+1 |
|---|---|---|---|

# FIG. 12

Transmit first signal including resource request — 1205

Receive second signal including uplink resource allocation — 1210

Transmit uplink data — 1215

# FIG. 13

Transmit first signal including resource request — 1305

Transmit second signal including uplink resource allocation — 1310

Receive uplink data — 1315

# FIG. 14

# FIG. 15

# FIG. 16

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 17

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

# FIG. 18

## INTERNATIONAL SEARCH REPORT

| | |
|---|---|
| International application No. | |
| | **PCT/KR2023/014777** |

### A. CLASSIFICATION OF SUBJECT MATTER

**H04W 72/21**(2023.01)i; **H04W 72/232**(2023.01)i; **H04L 5/00**(2006.01)i; **H04W 72/12**(2009.01)i

According to International Patent Classification (IPC) or to both national classification and IPC

### B. FIELDS SEARCHED

Minimum documentation searched (classification system followed by classification symbols)

H04W 72/21(2023.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SR(scheduling resource), 요청(request), 상향링크(uplink), 자원(resource), multiple PUSCH, SLIV(slot length indication value), MCS(modulation and coding scheme), XR(eXtender Reality)

### C. DOCUMENTS CONSIDERED TO BE RELEVANT

| Category* | Citation of document, with indication, where appropriate, of the relevant passages | Relevant to claim No. |
|---|---|---|
| Y | LG ELECTRONICS. XR-specific capacity enhancements techniques. R1-2207043, 3GPP TSG RAN WG1 Meeting #110. Toulouse, France. 12 August 2022.<br>See pages 2-4. | 1-14 |
| Y | QUALCOMM INCORPORATED. Capacity Enhancement Techniques for XR. R1-2205056, 3GPP TSG RAN WG1 #109-e, e-Meeting. 29 April 2022.<br>See sections 2.1 and 3.2. | 1-14 |
| A | SONY. Discussion on XR-specific capacity enhancements. R1-2206132, 3GPP TSG RAN WG1 Meeting #110. Toulouse, France. 12 August 2022.<br>See section 2.4. | 1-14 |
| A | MODERATOR (ERICSSON). Moderator Summary#1 – Study on XR Specific Capacity Improvements. R1-2207820, 3GPP TSG-RAN WG1 Meeting #110. Toulouse, France. 28 August 2022.<br>See section 3.3. | 1-14 |
| A | KR 10-2020-0133256 A (ZTE CORPORATION) 26 November 2020 (2020-11-26)<br>See paragraphs [0097]-[0126]; and figure 1. | 1-14 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2024** | **17 January 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014777**

| Patent document cited in search report | | | Publication date (day/month/year) | Patent family member(s) | | | Publication date (day/month/year) |
|---|---|---|---|---|---|---|---|
| KR | 10-2020-0133256 | A | 26 November 2020 | CN | 110366248 | A | 22 October 2019 |
| | | | | EP | 3780811 | A1 | 17 February 2021 |
| | | | | JP | 2021-516013 | A | 24 June 2021 |
| | | | | JP | 7102538 | B2 | 19 July 2022 |
| | | | | US | 11399392 | B2 | 26 July 2022 |
| | | | | US | 2021-0100033 | A1 | 01 April 2021 |
| | | | | WO | 2019-192285 | A1 | 10 October 2019 |

Form PCT/ISA/210 (patent family annex) (July 2022)